# EUROPÄISCHE PATENTANMELDUNG

(11) **EP 1 693 659 A1**
(43) Veröffentlichungstag der Anmeldung: **23.08.2006**
(21) Anmeldenummer: 05101310.0
(22) Anmeldetag: 21.02.2005
(51) Int. Cl.: G01L 1/16, G01L 5/00

(54) **Kraftmessvorrichtung innerhalb einer Befestigungsschraube**

(71) Anmelder: Kluft, Werner, D-52078 Aachen (DE)
(72) Erfinder: Kluft, Werner, D-52078 Aachen (DE)
(74) Vertreter: Dallmeyer, Georg

(57) **Zusammenfassung**

Bei einer Kraftmessvorrichtung mit einem piezoelektrischen Kraftsensor (2) zum Messen von Kräften in oder zwischen Maschinenteilen (8, 9), vorzugsweise im Kraftnebenschluss einer Maschine, insbesondere einer Werkzeugmaschine oder einer Spritzgießmaschine, bei der der Kraftsensor (2) in ein Schraubelement integriert in ein Maschinenteil (8, 9) einschraubbar ist, ist vorgesehen, dass das Schraubelement des piezoelektrischen Kraftsensors (2) aus einer in mindestens ein Maschinenteil (8, 9) einschraubbaren Befestigungsschraube (10) besteht, dass die Befestigungsschraube (10) eine koaxiale Aussparung (16, 30) aufweist, in die der Kraftsensor (2) unter Vorspannung im festgespannten Zustand der Befestigungsschraube (10) einsetzbar ist.

## Beschreibung

Die Erfindung betrifft eine Kraftmessvorrichtung mit einem piezoelektrischen Kraftsensor zum Messen von Kräften in oder zwischen Maschinenteilen, vorzugsweise im Kraftnebenschluss einer Maschine oder Vorrichtung, insbesondere einer Werkzeugmaschine oder einer Spritzgießmaschine, nach dem Oberbegriff des Anspruchs 1 sowie ein Verfahren zum Messen von Kräften nach dem Oberbegriff des Anspruchs 14.

Aus der EP-B-0719405 ist eine Kraftmessvorrichtung mit einem Kraftsensor zum Messen von Kräften zwischen einander parallelen Maschinenteilen, vorzugsweise im Kraftnebenfluss bekannt. Die Kraftmessvorrichtung wird in eine Aussparung der Maschine eingesetzt und besteht aus zwei Messkeilen, die mit Hilfe einer Verstelleinrichtung relativ zueinander verschiebbar sind. Nachteilig ist dabei, dass an der Maschine eine geeignete Aussparung in der Regel nicht vorhanden ist und daher eine solche Aussparung in die Maschine eingearbeitet werden muss. Ein Nachrüsten einer solchen Kraftmessvorrichtung ist daher sehr kosten-und zeitaufwändig.

Es ist ferner bekannt, einen piezoelektrischen Sensor für die indirekte Kraftmessung in Strukturen von Maschinen, Werkzeugen in einer Montagebohrung vorzusehen, wobei sowohl Zug- als auch Druckkräfte der Maschinenstruktur erfasst werden können. Der Kraftsensor, der aus einem Piezoquarzsensor bestehen kann, sitzt in einem Montagenippel mit Außengewinde, der in die Montagebohrung eingesetzt werden kann. Hierzu sieht die Montagebohrung an ihrem Ende einen Gewindeabschnitt vor, so dass der Montagenippel im Inneren der Montagebohrung mit dem Sensor eingeschraubt werden kann. Dabei wird das freie Ende des Montagenippels gegen den Boden der Montagebohrung mit einer Vorspannung gegengeschraubt, so dass der Kraftsensor vorgespannt in der Montagebohrung sitzt. Der Schraubkopf des Montagenippels dient demzufolge lediglich dazu, eine Vorspannung zwischen Kraftsensor und Boden der Montagebohrung zu erzeugen. Es versteht sich, dass der Montagenippel dabei nur zur Erzeugung der Vorspannung angezogen werden darf. Nachteilig ist bei einer derartigen Kraftmessvorrichtung, dass im Falle einer Nachrüstung die zu untersuchende Maschine mit einer Montagebohrung versehen werden muss. Durch eine derartige Montagebohrung kann die Festigkeit der Maschinenstruktur geschwächt werden. Auch in den Fällen, in denen die Maschinen geleast sind, kann das Vorsehen einer Montagebohrung nicht zulässig sein. Wenn an verschiedenen Stellen der Maschine Messungen vorgenommen werden, müssen häufig mehrere Montagebohrungen erstellt werden. An schwer zugänglichen Stellen können keine Montagebohrungen vorgesehen werden.

Der Erfindung liegt die Aufgabe zugrunde, eine Kraftmessvorrichtung der eingangs genannten Art, sowie ein Verfahren zum Messen von Kräften, zu schaffen, die in einfacher Weise nachrüstbar sind und die eine Messung von Kraftänderungen, insbesondere im Kraftnebenschluss ohne Eingriffe in die Maschinenstruktur erlauben.

Zur Lösung dieser Aufgabe dienen die Merkmale der Ansprüche 1 und 14.

Die Erfindung sieht in vorteilhafter Weise vor, dass das Schraubelement des piezoelektrischen Kraftsensors aus einer in mindestens ein Maschinenteil einschraubbaren Befestigungsschraube besteht und dass die Befestigungsschraube eine koaxiale Aussparung aufweist, in die der Kraftsensor unter Vorspannung einsetzbar ist. Der wesentliche Vorteil der Erfindung besteht darin, dass eine geringfügig modifizierte Befestigungsschraube als Kraftmessvorrichtung verwendet wird. Diese modifizierte Befestigungsschraube kann eine beliebige bestehende Befestigungsschraube der Maschine ersetzen und deren Funktion übernehmen, da die Modifikationen an der Befestigungsschraube deren Festigkeitseigenschaften nicht beeinflussen. Beispielsweise ist bei Zylinderschrauben mit einem Innensechskant bereits eine koaxiale Aussparung vorgesehen, die zur Aufnahme des Kraftsensors, nachdem die Befestigungsschraube in üblicher Weise festgezogen worden ist und ihre Funktion als Befestigungsschraube erfüllt, verwendet werden kann. Der Kraftsensor kann dann auf die Befestigungsschraube einwirkende Kraftänderungen messen und zwar weil der Kraftsensor unter Vorspannung eingesetzt ist, sowohl Zug- als auch Druckkraftänderungen.

Die Befestigungsschraube weist einen Schraubenkopf und einen Schraubenschaft auf, wobei die zur Befestigungsschraube koaxiale Aussparung sich bis in den Schraubenschaft erstreckt und der Kraftsensor im festgespannten Zustand der Befestigungsschraube die axial auf die Befestigungsschraube einwirkende Kraftänderung im Bereich der axialen Erstreckung des Kraftsensors im Schraubenschaft misst. Der piezoelektrische Kraftsensor kann demzufolge in vorteilhafter Weise die Kraftänderungen im Bereich des Schraubenschaftes messen und zwar in dem Umfang, in dem er sich in diesen Schraubenschaft erstreckt.

Vorzugweise ist vorgesehen, dass der Kraftsensor einen Übertragungsbolzen aufweist, der in ein zur Längsachse koaxiales, an der Aussparung im Schraubenkopf angrenzendes Sackloch beweglich einsetzbar ist. Mit Hilfe des Übertragungsbolzens kann die Messstrecke verlängert werden, so dass ein stärkeres Signal erhalten werden kann.

Der Schraubenschaft weist einen oberen gewindefreien Abschnitt und einen unteren Gewindeabschnitt auf, wobei sich das koaxiale Sackloch von der Aussparung im Schraubenkopf ausgehend im Bereich des gewindefreien Abschnitts erstreckt.

Der Übertragungsbolzen des Kraftsensors überträgt die auf dem gewindefreien Abschnitt des Schraubenschaftes einwirkender Kraft- bzw. Bohrungsänderungen auf piezoelektrische Elemente des Kraftsensors. Hierzu kann beispielsweise das Gehäuse des Kraftsensors einen gegenüber dem Gehäuse beweglichen oder einen biegbaren Boden aufweisen.

Die Aussparung im Schraubenkopf der Befestigungsschraube weist eine derartige Querschnittsform auf, dass ein Werkzeug zum Anziehen oder Lösen der Befestigungsschraube formschlüssig in die Aussparung einsetzbar ist. Insofern ist die modifizierte Befestigungsschraube wie eine übliche Befestigungsschraube verwendbar, wobei nach dem Festziehen der Befestigungsschraube der Kraftsensor ebenfalls formschlüssig und damit verdrehsicher in die Aussparung eingesetzt werden kann.

Hierzu ist eine Vorspanneinrichtung vorgesehen, die an dem Schraubkopf angreift und den Kraftsensor in der Aussparung gegen die Befestigungsschraube vorspannt. Im Falle eines Übertragungsbolzens wird der Kraftsensor in der Aussparung gegen den Übertragungsbolzen und den Boden des Sacklochs vorgespannt.

Die Vorspanneinrichtung kann aus einer Schraubkappe bestehen, die in den Schraubkopf einschraubbar oder auf den Schraubkopf aufschraubbar ist.

Vorzugsweise besteht die Befestigungsschraube aus einer Zylinderschraube, die im Bereich des Schraubenkopfes ein Außengewinde aufweist, auf das die Schraubkappe als Vorspanneinrichtung aufschraubbar ist. Nach dem Festspannen der Befestigungsschraube und dem Einsetzen des Kraftmesssensors kann mit Hilfe der Schraubkappe eine gewünschte Vorspannung auf den Kraftsensor aufgebracht werden. Die aufgebrachte Vorspannung muss nur derart hoch sein, dass die maximal auftretenden Zugkräfte noch gemessen werden können.

Die Querschnittsfläche des Sacklochs ist geringer als die Differenz aus der Kreisfläche des Außengewindedurchmessers des Gewindeabschnitts der Befestigungsschraube und der Kreisfläche des Kerndurchmessers der Befestigungsschraube. Sofern die Querschnittsfläche des Sacklochs die genannte Differenz der Kreisflächen nicht übersteigt, wird die Befestigungsschraube durch die Modifikation nicht in der maximalen Belastbarkeit in Axialrichtung beeinträchtigt, da sich die Querschnittsfläche vom unteren Ende des Schraubenschaftes bis zum Schraubenkopf nicht verkleinert.

Der Kraftsensor weist ein Gehäuse auf, dessen äußere Querschnittsform der Querschnittsform der Aussparung im Schraubenkopf angepasst ist. Es versteht sich, dass dabei ein ausreichendes Spiel zwischen dem Gehäuse und dem Schraubenkopf verbleibt, so dass das Gehäuse von Querkräften freigehalten ist.

Des weiteren kann in vorteilhafter Weise vorgesehen sein, dass das Gehäuse des Kraftsensors abgedichtet ist. Dadurch ist es möglich, die Kraftmessvorrichtung auch in Bereichen einzusetzen, in denen Kühlmittel unter Druck zugeführt werden.

Das Gehäuse des Kraftsensors hat vorzugsweise einen in axialer Richtung der Befestigungsschraube beweglichen Boden, der einerseits in Kontakt mit piezoelektrischen Elementen und andererseits mit dem Übertragungsbolzen ist.

Das erfindungsgemäße Verfahren zum Messen von Kräften in und zwischen Maschinenteilen einer Maschine, vorzugsweise im Kraftnebenfluss weist folgende Schritte auf:
- Einschrauben und Festziehen einer Befestigungsschraube in eine vorhandene oder neu erstellte Gewindebohrung der Maschine,
- Einsetzen eines Kraftsensors in eine Aussparung in dem Schraubenkopf der festgespannten Befestigungsschraube
- Vorspannen des Kraftsensors gegen die Befestigungsschraube, und
- Messen der im Betrieb der Maschine auf die Befestigungsschraube einwirkenden Kraftänderungen in Axialrichtung der Befestigungsschraube.

Es kann die Verwendung eines Übertragungsbolzens des Kraftsensors in einer koaxialen Sacklochbohrung, die sich an die Aussparung im Schraubenkopf anschließt, vorgesehen sein, um die Messstrecke zu verlängern und damit das Kraftmesssignal des Kraftsensors zu verstärken.

Vorzugsweise erfolgt die Messung in einem gewindelosen Abschnitt des Schraubenschaftes.

Im Folgenden werden unter Bezugnahme auf die Zeichnungen Ausführungsbeispiele der Erfindung näher erläutert. Es zeigen:

Fig. 1 eine Draufsicht auf die Kraftmessvorrichtung;

Fig. 2einen Schnitt entlang der Linie II-II in Fig. 1,

Fig. 3ein alternatives Ausführungsbeispiel mit einem alternativen Piezoelement und einem modifizierten Sensorgehäuse, und

Fig. 4Einen Schnitt entlang der Linie IV-IV in Fig. 3.

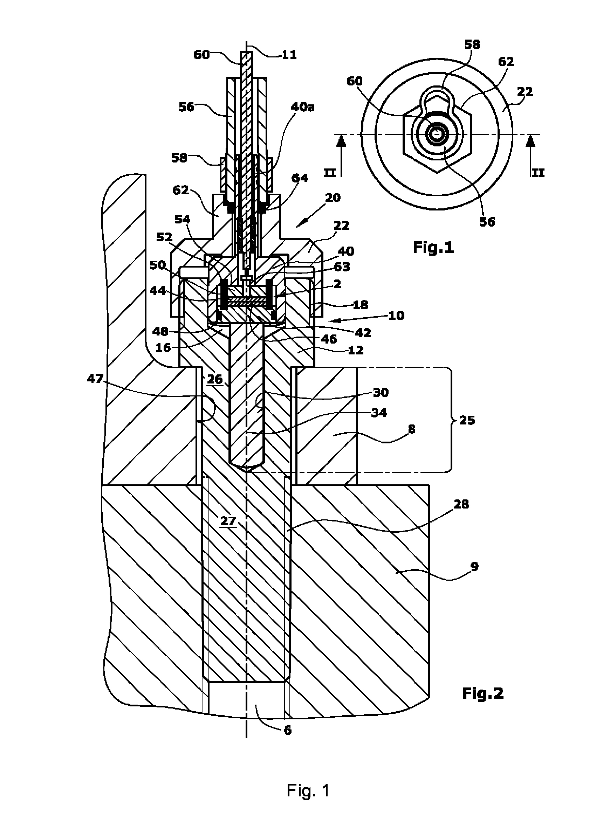

Die Fign. 1 und 2 zeigen ein erstes Ausführungsbeispiel einer Kraftmessvorrichtung mit einem in einer üblichen Befestigungsschraube 10 integrierten Kraftsensor 2. Die Kraftmessvorrichtung eignet sich insbesondere zum Messen von Kraftänderungen in oder zwischen Maschinenteilen 8, 9 und zwar vorzugsweise im Kraftnebenschluss einer Maschine.

Derartige Maschinen sind insbesondere Werkzeugmaschinen oder Spritzgießmaschinen. Die Kraftmessvorrichtung kann dort zur Überwachung von Maschinenkräften im Rahmen der Maschinenüberwachung und der Werkzeugüberwachung, sowie zur Holmkraftüberwachung an Spritzgießmaschinen verwendet werden.

Die Kraftmessvorrichtung eignet sich insbesondere für Bearbeitungsmaschinen mit kurzen Bearbeitungszyklen. Ein spezielles Anwendungsgebiet ist beispielsweise die Anwendung bei Drehmaschinen zur Werkzeugbrucherkennung mit dynamischen Schwellwerten.

Ein wesentlicher Gesichtspunkt beim Einsatz der Kraftmessvorrichtung ist, dass die Befestigungsschraube 10, in der der Kraftsensor 2 integriert ist, ihre Funktion beibehalten kann, so dass die Kraftmessvorrichtung anstelle einer vorhandenen Befestigungsschraube eingesetzt werden kann. Dies erlaubt insbesondere die Nachrüstung von bereits bestehenden Maschinen, ohne dass die Maschinen in irgendeiner Weise modifiziert werden müssen. Dadurch dass die Kraftmessvorrichtung letztlich wie eine Befestigungsschraube gehandhabt werden kann, ist es auch möglich, die Kraftmessvorrichtung an schlecht zugänglichen Stellen einzusetzen, wie beispielsweise in Fig. 1 wiedergegeben. Dort ist ein flanschartiges Maschinenteil 8 mit Hilfe einer Befestigungsschraube 10 auf dem Maschinenteil 9 befestigt. Der Schraubkopf 12 der Befestigungsschraube 10 befindet sich in der Nähe einer die Zugänglichkeit beeinträchtigenden aufragenden Wand.

Die Befestigungsschraube 10 entspricht in den Abmessungen, dem Material und der Schlüsselweite einer herkömmlichen Befestigungsschraube. Sie ist lediglich dahingehend modifiziert, dass die beispielsweise für einen Innensechskantschlüssel bereits vorhandene Aussparung 16 in Axialrichtung durch ein zur Längsachse 11 der Befestigungsschraube koaxiales Sackloch 30 erweitert sein kann, in dem ein von dem Gehäuse 40 des Kraftsensors 2 abstehender Übertragungsbolzen 34 angeordnet ist. Es versteht sich, dass der Übertragungsbolzen auch einstückig mit den Elementen des Gehäuses 40 sein kann.

Alternativ kann der Übertragungsbolzen 34 vormontiert in dem Sackloch 30 der Befestigungsschraube 10, fixiert sein. Zum Beispiel kann der Überragungsbolzen 34 mit Silikon im Bereich der Aussparung 16 gegen Herausfallen gesichert sein.

Die Befestigungsschraube 10 ist des weiteren dahingehend modifiziert, dass sie eine Vorspanneinrichtung 20 aufweist, die an dem Schraubenkopf 12 angreift und den Kraftsensor 2 in der Aussparung 16 gegen die Befestigungsschraube 10 vorspannt. In allen dargestellten Ausführungsbeispielen besteht die Vorspanneinrichtung 20 aus einer Schraubkappe 22, die auf den Schraubkopf 12 aufschraubbar ist. Die aus einer Zylinderschraube bestehende Befestigungsschraube 10 hat hierzu an dem Schraubenkopf 12 ein Außengewinde 18, so dass die Schraubkappe 22 aufgeschraubt werden kann und den Kraftsensor gegen die Befestigungsschraube 10 vorgespannt werden kann. Hierzu weist die Schraubkappe 22 einen Sechskantkopf 62 auf, der in Draufsicht in Fig. 1 ersichtlich ist. Beim Anziehen der Schraubkappe 22 wird das Gehäuse 40 des Kraftsensors 2 vertikal nach unten gedrückt und gegen den Übertragungsbolzen 34 und den Boden des Sacklochs 30 vorgespannt. Selbstverständlich könnte anstelle eines Sechskantkopfes 62 auch die gesamte Schraubkappe 22 mit einer sechseckigen Außenkontor versehen sein, allerdings wird eine kreisförmige Außenkontur wegen des verringerten Platzbedarfs bevorzugt.

Das Gehäuse 40 des Kraftsensors 2 ist nach unten offen und weist eine bewegliche Bodenplatte 42 auf, die umfangsmäßig gegenüber dem Gehäuse 40 mit einer Dichtung 48 abgedichtet ist. Die Bodenplatte 42 steht einerseits in Kontakt mit dem Übertragungsbolzen 34 und andererseits mit dem der negativen Elektrode des Piezoelementes 46. Auf dem Piezoelement 46 liegt ein Piezoelement 44 auf, dessen positive Ladung von einer Ringplatte 52 abgegriffen wird, die ihrerseits mit einer Isolierschicht 54 von dem Gehäuse 40 getrennt ist. Die Ringplatte 52 umschließt eine Fassung 63 für ein Anschlusskabel 60, das beispielsweise in die Fassung 63 eingelötet ist. Die Bauteile 44,46,52 und 54 sind von einem elektrisch isolierenden Zentrierring 50 eingefasst, der in Ringnuten in der Bodenplatte 42 und in das Gehäuse 40 mit Spiel eingreift.

Oberhalb der Schraubkappe 22 ist das Anschlusskabel 60 mit einem Schutzschlauch 56 umgeben, der von einer Krimpschelle 58 auf dem rohrförmigen Fortsatz 40a des Gehäuses 40 gehalten ist. Dabei bleibt die Schraubkappe 22 gegenüber dem Schutzschlauch 56, dem Anschlusskabel 60 und dem Gehäuse 40 drehbar und ist an ihrem oberen Ende durch den O-Ring 64 abgedichtet.

Das in dem Anschlusskabel 60 verfügbare Signal des piezoelektrischen Kraftsensors 2 ist demzufolge an der positiven Elektrode des Piezoelementes 44 abgegriffen, während die Masse über die Bodenplatte 42 und dem Bolzen 34 mit der Befestigungsschraube 10 über die negative Elektrode des Piezoelementes 46 verbunden ist.

Die Befestigungsschraube 10 mit dem Schraubenkopf 12 und dem Schraubenschaft 27 weist einen gewindefreien Abschnitt 26 auf, sowie ein Außengewinde 28, das in eine Gewindebohrung 6 des Maschinenteils 9 einschraubbar ist.

Nachdem die Befestigungsschraube 10 mit dem üblichen Drehmoment der anderen Befestigungsschrauben der Maschine oder Vorrichtung mit Hilfe eines in die Aussparung 16 einsetzbaren Schlüssels festgezogen ist, kann der Kraftsensor 2 mit Hilfe der Schraubkappe 22 aufgeschraubt werden. Hierzu wird zunächst der Übertragungsbolzen 34 in das Sackloch 30 mit Spielpassung eingesetzt, anschließend das Gehäuse 40 des Kraftsensors 2 aufgesetzt und mit der Schraubkappe 22 derart vorgespannt, dass die Messung von Zug- und Druckkräften bzw. Zug- und Druckkraftänderungen, insbesondere Stauchungsänderung in der Befestigungsschraube 10 möglich ist.

Die Messstrecke 25 erstreckt sich im Bereich des gewindelosen Schaftabschnitts 26 zwischen dem Schraubenkopf 12 bis zum Ende des Sacklochs 30.

Der gewindelose Schaftabschnitt 26 befindet sich mit Spielpassung innerhalb einer Durchgangsbohrung 47 des Maschinenteils 8.

Im Betrieb der Maschine werden die innerhalb der Messstrecke 25 auftretenden Kraft- bzw. Stauchungsänderungen in Axialrichtung gemessen, wobei die Messsignale über das Anschlusskabel 60 einem Ladungsverstärkungs-und Auswertungsgerät zugeführt werden. Mit dem gleichen Gerät kann auch überprüft werden, ob bei der Montage der Kraftmessvorrichtung eine ausreichende Vorspannkraft eingestellt worden ist.

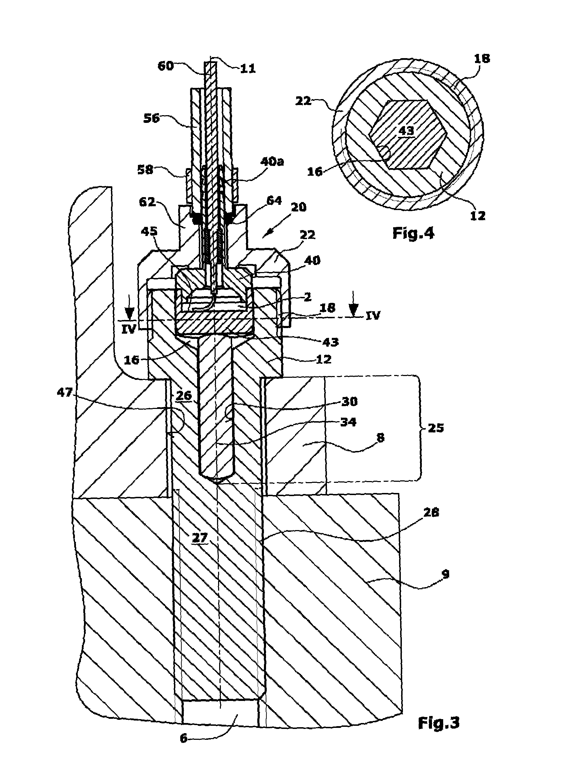

Fig. 3 zeigt ein zweites Ausführungsbeispiel, das sich lediglich in der Verwendung eines anderen Piezoelementes 45 unterscheidet. Hierzu weist das Gehäuse 40 ein anderes Bodenelement 43 auf, das relativ zu dem oberen Teil des Gehäuses 40 beweglich ist.

Bei diesem Ausführungsbeispiel weist der Übertragungsbolzen an beiden Enden eine gerundete Form auf, so dass die Kraft auf der dem Piezoelement 45 zugewandten Seite punktuell in das Bodenelement 43 eingeleitet wird und sich dadurch symmetrisch verformt. Diese Bodenverformung wird von dem piezoelektrischen Element, das aus einer dünnen aufgeklebten Keramikscheibe besteht, gemessen.

Eine Kallibrierung der Kraftmessvorrichtung kann nach dem Festziehen der Befestigungsschraube 10 erfolgen. Die piezoelektrischen Elemente 44,45,46 können Stauchungsänderungen in der Messstrecke 25 im Nanometerbereich messen.

Die Kraftmessvorrichtung ist besonders geeignet, Veränderungen in kurzen Zyklen, wobei der Reset-Rhythmus einige Bruchteile von Sekunden bis zu einigen Minuten betragen kann, zu messen.

Fig. 4 zeigt einen Schnitt entlang der Linie IV-IV in Fig. 3. Der Schnitt geht durch die Schraubkappe 22, die als Vorspanneinrichtung dient, durch den Schraubenkopf 12, durch die Aussparung 16, die als Innensechskant ausgeführt ist, um einen entsprechenden Schlüssel aufzunehmen bzw. das Gehäuse 40 des Kraftsensors 2 bzw. des Bodenelementes 43 bei dem Ausführungsbeispiel der Fig. 3.

Das Gehäuse 40 bzw. das Bodenelement 43 weisen ein Spiel gegenüber der Innensechskant-Aussparung 16 auf, so dass keine radialen Kräfte von dem Schraubenkopf 12 auf den Kraftsensor 2 übertragen werden können.

## Patentansprüche

1. Kraftmessvorrichtung mit einem piezoelektrischen Kraftsensor (2) zum Messen von Kräften in oder zwischen Maschinenteilen (8, 9), vorzugsweise im Kraftnebenschluss einer Maschine oder Vorrichtung, insbesondere einer Werkzeugmaschine oder einer Spritzgießmaschine, bei der der Kraftsensor (2) in ein Schraubelement integriert in ein Maschinenteil (8, 9) einschraubbar ist, **dadurch gekennzeichnet, dass** das Schraubelement des piezoelektrischen Kraftsensors (2) aus einer in mindestens ein Maschinenteil (8, 9) einschraubbaren Befestigungsschraube (10) besteht, dass die Befestigungsschraube (10) eine koaxiale Aussparung (16, 30) aufweist, in die der Kraftsensor (2) unter Vorspannung im festgespannten Zustand der Befestigungsschraube (10) einsetzbar ist.

2. Kraftmessvorrichtung nach Anspruch 1, **dadurch gekennzeichnet, dass** die Befestigungsschraube (10) einen Schraubenkopf (12) und einen Schraubenschaft (27) aufweist, dass die koaxiale Aussparung (16, 30) sich bis in den Schraubenschaft (2) erstreckt und dass der Kraftsensor (2) im festgespannten Zustand der Befestigungsschraube (10) die axial auf die Befestigungsschraube (10) einwirkende Kraft oder Stauchungen im Bereich der axialen Erstreckung des Kraftsensors (2) im Schraubenschaft (27) misst.

3. Kraftmessvorrichtung nach Anspruch 1 oder 2, **dadurch gekennzeichnet, dass** der Kraftsensor (2) einen Übertragungsbolzen (34) aufweist, der in ein koaxiales, an die Aussparung (16) angrenzendes Sackloch (30) beweglich einsetzbar ist.

4. Kraftmessvorrichtung nach Anspruch 2 oder 3, **dadurch gekennzeichnet, dass** der Schraubenschaft (27) einen oberen gewindefreien Abschnitt (26) und einen unteren Gewindeabschnitt (28) aufweist und dass sich das koaxiale Sackloch (30) von der Aussparung (16) ausgehend im Bereich des gewindefreien Abschnitts (26) erstreckt.

5. Kraftmessvorrichtung nach Anspruch 3 oder 4, **dadurch gekennzeichnet, dass** der Übertragungsbolzen (34) des Kraftsensors (2) die auf den gewindefreien Abschnitt (26) des Schraubenschaftes (27) einwirkende Kraftänderung oder Stauchungsänderung auf piezoelektrische Elemente (44, 45, 46) des Kraftsensors (2) überträgt.

6. Kraftmessvorrichtung nach einem der Ansprüche 1 bis 5, **dadurch gekennzeichnet, dass** die Aussparung (16) im Schraubenkopf (12) der Befestigungsschraube (10) eine derartige Querschnittsform aufweist, dass ein Werkzeug zum Anziehen oder Lösen der Befestigungsschraube (10) formschlüssig in die Aussparung (16) einsetzbar ist.

7. Kraftmessvorrichtung nach einem der Ansprüche 1 bis 6, **dadurch gekennzeichnet, dass** eine Vorspanneinrichtung (20) an dem Schraubenkopf (12) angreift und den Kraftsensor (2) in der Aussparung (16) gegen die Befestigungsschraube (10) vorspannt.

8. Kraftmessvorrichtung nach Anspruch 7, **dadurch gekennzeichnet, dass** die Vorspanneinrichtung (20) aus einer Schraubkappe (22) besteht, die in den Schraubkopf (12) einschraubbar oder auf den Schraubkopf (12) aufschraubbar ist..

9. Kraftmessvorrichtung nach Anspruch 8, **dadurch gekennzeichnet, dass** die Befestigungsschraube (10) eine Zylinderschraube ist, die im Bereich des Schraubenkopfes (12) ein Außengewinde (18) aufweist, auf das die Schraubkappe (22) aufschraubbar ist.

10. Kraftmessvorrichtung nach einem der Ansprüche 3 bis 9, **dadurch gekennzeichnet, dass** die Querschnittsfläche des Sacklochs (30) geringer ist als die Differenz aus der Kreisfläche des Außengewindedurchmessers des Gewindeabschnitts (28) und der Kreisfläche des Kerndurchmessers des Gewindeabschnitts (28).

11. Kraftmessvorrichtung nach einem der Ansprüche 1 bis 10, **dadurch gekennzeichnet, dass** der Kraftsensor (2) ein Gehäuse (40) aufweist, dessen äußere Querschnittsform der Querschnittsform der Aussparung (16) im Schraubenkopf (12) angepasst ist.

12. Kraftmessvorrichtung nach Anspruch 11, **dadurch gekennzeichnet, dass** das Gehäuse (40) des Kraftsensors (2) abgedichtet ist.

13. Kraftmessvorrichtung nach Anspruch 11 oder 12, **dadurch gekennzeichnet, dass** das Gehäuse (40) des Kraftsensors (2) einen in axialer Richtung der Befestigungsschraube (10) beweglichen Boden (42,43) aufweist, der einerseits in Kontakt mit piezoelektrischen Elementen (44, 45, 46) und andererseits mit dem Übertragungsbolzen (34) ist.

14. Verfahren zum Messen von Kräften in, oder zwischen Maschinenteilen (8, 9) einer Maschine, vorzugsweise im Kraftnebenfluss, insbesondere für Werkzeugmaschinen und Spritzgießmaschinen, durch Einschrauben und Festziehen einer Befestigungsschraube (10) in eine vorhandene oder neu erstellte Gewindebohrung (6) der Maschine,durch Einsetzen eines Kraftsensors (2) in eine Aussparung (16, 30) in dem Schraubenkopf (12) der festgespannten Befestigungsschraube (10), durch Vorspannen des Kraftsensors (2) gegen die Befestigungsschraube (10), und durch Messen der im Betrieb der Maschine auf die Befestigungsschraube (10) einwirkenden Kraftänderungen in Axialrichtung der Befestigungsschraube (10).

15. Verfahren nach Anspruch 14, **dadurch gekennzeichnet, dass** ein Übertragungsbolzen (34) des Kraftsensors (2) in einem koaxialen, sich an die Aussparung (16) anschließenden Sackloch (30) zur Verlängerung der Messstrecke und zur Verstärkung des Kraftmesssignals des Kraftsensors (2) verwendet wird.

16. Verwendung einer Befestigungsschraube (10) einer Maschine, insbesondere einer Werkzeugmaschine oder einer Spritzgießmaschine zum Befestigen eines Maschinenteils (8, 9) und zum Messen von Kräften in Axialrichtung der Befestigungsschraube (10), vorzugsweise im Kraftnebenfluss, wobei die Befestigungsschraube (10) einen Schraubenkopf (12) sowie einen Schraubenschaft (27) mit einem gewindelosen Abschnitt (26) und einem Gewindeabschnitt (28) aufweist und die Befestigungsschraube (10) in eine vorhandene oder neu erstellte Gewindebohrung (6) des mindestens einen Maschinenteils (8, 9) einschraubbar ist, wobei der Schraubenkopf (12) eine Aussparung (16, 30) aufweist, in die bei festgespannter Befestigungsschraube (10) ein Kraftsensor (2) unter Vorspannung zum Messen der Kraftänderungen in dem gewindelosen Abschnitt (26) des Schraubenschaftes (27) einsetzbar ist.
